# EUROPEAN PATENT SPECIFICATION

(11) **EP 1 799 782 B1**
(45) Date of publication and mention of the grant of the patent: **12.12.2012**
(21) Application number: 05804238.3
(22) Date of filing: 07.10.2005
(51) Int. Cl.: C09D 133/14

(54) **SELF CROSSLINKING WATERBORNE COATINGS**
SELBSTVERNETZENDE WÄSSRIGE BESCHICHTUNGEN
REVETEMENTS AQUEUX AUTO-RETICULANTS

(30) Priority: 08.10.2004 US 617450 P
(43) Date of publication of application: 27.06.2007
(73) Proprietor: The Sherwin-Williams Company, Cleveland, OH 44115 (US)
(72) Inventor: RUHOFF, Philip, J., Shaker Heights, OH 44122 (US); SABO, Lynn, O., Strongsville, OH 44136 (US); DRESHAR, Janice, K., Westlake, OH 44145 (US); MACKULIN, Peter, J., North Olmsted, OH 44070 (US); KRAJNIK, John, M., Shaker Heights, OH 44120 (US)
(74) Representative: Heinemann, Monica
(86) International application number: PCT/US2005/036404
(87) International publication number: WO 2006/042220

(56) References cited:
- EP-A- 0 618 238
- EP-A- 1 304 357
- US-A- 5 817 712
- US-A- 5 928 730
- US-A1- 2004 034 158

## Description

This invention relates to waterborne coatings having improved performance properties. Conventional latex paints are widely used because they provide reduced volatile organic compound emission and because they allow easier clean up than solvent borne coatings. However, when compared to solvent borne coating systems, typical latex coatings may lack certain performance properties, such as the chemical resistance and durability provided by such solvent borne coatings.

EP-A-1304357 disclosess a carbonyl-functional binder resin (a), polyhydrazide or polyamine crosslinking agent and organic pigments.

US-A-2004/0034158 discloses paint of acrylic resin and poly vinylchloride particles.

It has now been found that latex coating compositions having improved properties, such as improved stain and chemical resistance and durability, can be produced by formulating a chemical coating comprising a binder resin having post crosslinking groups; comprising carbonyl groups a suitable crosslinker for the binder resin; wherein the crosslinking agent is selected from di- orpolyamines, di- and polyhydrazides and di- and polyhydrazines and polymeric polyvinyl chloride extender particles.

The present invention is directed to an aqueous coating composition in which the binder resin has functional groups that further react with one or more co-dispersed crosslinkers some time after initial formation of the binder resin. In certain applications the substantive crosslinking will be delayed until application of the coating to a substrate and evaporation of at least some of the aqueous carrier.

As reactive elements, the aqueous coating composition contains (a) a binder resin comprising the polymerization reaction product of at least one or more copolymerizable monoethylenically unsaturated monomers, wherein at least one of the monoethylenically unsaturated monomers contains latent crosslinking functionality; and (b) a crosslinking amount of at least one crosslinker reactive with the crosslinking functionality. As a coating, this invention comprises the crosslinkable binder resin, the crosslinker, and polymeric extender particles.

The latent crosslinking functionality is imparted to the binder resin by incorporating monomers having reactive functional groups selected from carbonyl groups, such as ketone, or aldehyde, or acetoacetoxy and the crosslinker could representatively have amino or hydrazide groups.

If desired, the crosslinker can be withheld from the coating composition until immediately prior to application to ensure that the coating composition remains fluid. With pendent carbonyl groups on the binder resin and the use of a water-soluble polyhydrazide, it is convenient to incorporate the hydrazide into the aqueous coating to provide a single package which will cure upon application.

### Binder Resins

The latex polymers used as binder resins in accordance with the present invention (also referred to herein as "binders") include those polymers polymerized from one or more suitable monomers. Typically, the binders are polymerized from one or more copolymerizable monoethylenically unsaturated monomers such as, for example, vinyl monomers and/or acrylic monomers.

The vinyl monomers suitable for use in accordance with the present invention include any compounds having vinyl functionality, i.e., ethylenic unsaturation, exclusive of compounds having acrylic functionality, e.g., acrylic acid, methacrylic acid, esters of such acids, acrylonitrile and acrylamides. Preferably, the vinyl monomers are selected from the group consisting of vinyl esters, vinyl aromatic hydrocarbons, vinyl aliphatic hydrocarbons, vinyl alkyl ethers and mixtures thereof.

Suitable vinyl monomers include vinyl esters, such as, for example, vinyl propionate, vinyl laurate, vinyl pivalate, vinyl nonanoate, vinyl decanoate, vinyl neodecanoate, vinyl butyrates, vinyl benzoates, vinyl isopropyl acetates and similar vinyl esters; vinyl aromatic hydrocarbons, such as, for example, styrene, methyl styrenes and similar lower alkyl styrenes, chlorostyrene, vinyl toluene, vinyl naphthalene and divinyl benzene; vinyl aliphatic hydrocarbon monomers, such as, for example, vinyl chloride and vinylidene chloride as well as alpha olefins such as, for example, ethylene, propylene, isobutylene, as well as conjugated dienes such as 1,3 butadiene, methyl-2-butadiene, 1,3-piperylene, 2,3-dimethyl butadiene, isoprene, cyclohexene, cyclopentadiene, and dicyclopentadiene; and vinyl alkyl ethers, such as, for example, methyl vinyl ether, isopropyl vinyl ether, n-butyl vinyl ether, and isobutyl vinyl ether.

The acrylic monomers suitable for use in accordance with the present invention comprise any compounds having acrylic functionality. Preferred acrylic monomers are selected from the group consisting of alkyl acrylates, alkyl methacrylates, acrylate acids and methacrylate acids as well as aromatic derivatives of acrylic and methacrylic acid, acrylamides and acrylonitrile. Typically, the alkyl acrylate and methacrylic monomers (also referred to herein as "alkyl esters of acrylic or methacrylic acid") will have an alkyl ester portion containing from 1 to about 18, preferably about 1 to 8, carbon atoms per molecule.

Suitable acrylic monomers include, for example, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecyl acrylate and methacrylate, benzyl acrylate and methacrylate, isobornyl acrylate and methacrylate, neopentyl acrylate and methacrylate, and 1-adamantyl methacrylate.

In addition to the specific monomers described above, those skilled in the art will recognize that other monomers such as, for example, allylic monomers, or monomers which impart wet adhesion, such as monomers having teritiary amine, ethylene ureido, or N-heterocyclic groups, can be used in place of, or in addition to, the specifically described monomers in the preparation of the binders. Representative wet adhesion promoting monomers include methacrylamidoethyl ethylene urea, dimethylaminoethyl methacrylate, vinyl imidizole and 2-ethyleneuriedo-ethyl methacrylate. The amount of such other monomers is dependent on the particular monomers and their intended function, which amount can be determined by those skilled in the art. In one embodiment of this invention, a wet adhesion promoting monomer, if desired, could be present at levels ranging up to about 5% of the total monomer mix by weight.

The monomer mix polymerized to create the binder resin of the present invention will comprise at least one ethylenically unsaturated monomer containing "latent crosslinking" capabilities, which as used herein means a monomer which possesses the ability to further react with a crosslinker some time after initial formation of the polymer. The crosslinking reaction can occur through the application of energy, e.g., through heat or radiation. Also, drying can activate the crosslinking polymer through changes in pH, oxygen content, evaporation of solvent or carrier, or other changes that causes a reaction to occur.

Representative examples of latent crosslinking carbonyl-containing monomers include acrolein, methacrolein, diacetone acrylamide, diacetone methacrylamide, 2 butanone methacrylate, formyl styrol, diacetone acrylate, diacetone methacrylate, acetonitrile acrylate, acetoacetoxyethyl methacrylate, acetoacetoxyethyl acrylate and vinylaceto acetate. These monomers normally do not affect crosslinking until during final film formation, for example, when the aqueous polymer emulsion simultaneously contains an appropriate added amount of a reactive material such as a polyamine compound as crosslinker. Particularly suitable compounds of this type are the dihydrazides and trihydrazides of aliphatic and aromatic dicarboxylic acids of 2 to 20 carbon atoms. Polyamine compounds useful as crosslinkers for the carboxyl functional groups include those having an average of at least two carbonyl-reactive groups of the formula - NH₂ and carbonyl reactive groups derived from such groups. Examples of useful amine functional groups include R-NH₂, R-O-NH₂, R-O-N=C<, R-NH-C(=O)-O-NH₂, wherein R is alkylene, alicyclic or aryl and may be substituted. Representative useful polyamine include ethylene diamine, isophorone diamine, diethylenetriamine and dibutylenetriamine. In one embodiment of this invention it is useful to utilize polyhydrazides as the polyamine compounds. Representative useful polyhydrazides include oxalic dihydrazide, adipic dihydrazide, succinic dihydrazide, malonic dihydrazide, glutaric dihydrazide, phthalic or terephthalic dihydrazide and itaconic dihydrazide. Additionally, water-soluble hydrazines such as ethylene-1,2-dihydrazine, propylene-1,3-dihydrazine and butylene-1,4-dihydrazine can also be used as one of the crosslinking agents.

In one embodiment the binder resin can be obtained by the polymerization of a mixture of monomers, which mixture contains 0.5 to 25% by weight, based on the total weight of the polymer, of at least one monomer having latent crosslinking functionality.

In one embodiment of the present invention, the binder resin is an acid functional latex. Specific acid functional monomers suitable for use in accordance with the present invention include, for example, acrylic acid, methacrylic acid, ethacrylic acid, itaconic acid, maleic acid, dimeric acrylic acid or the anhydrides thereof. Besides carboxylic acids and anhydrides, monomers possessing other acid groups such as sulfonic or phosphoric acid groups are also useful. Representative monomers include ethylmethacrylate-2-sulfonic acid, 2-acrylamido-2-methylpropane sulfonic acid, 2-methyl-2-propenoic acid ethyl-2-phosphate ester (HEMA-phosphate), (1-phenylvinyl)-phosphonic acid, or (2-phenylvinyl)-phosphonic acid. Mixtures of acids are also practical.

For many applications, typically, the particle size of the binder resins would range from 0.1 to 1.0 microns. The Tg of some useful representative binder resins, of the present invention would typically be from -60 to 100°C. Binder resins having a Tg less than 20°C typically require less volatile organic compounds (solvents and coalescents) to form a smooth film compared to higher Tg polymers. In one useful embodiment the Tg would be less than 10°C. In another useful embodiment the Tg is less than 1°C. As used herein, the term "Tg" means polymer glass transition temperature.

Preparation of latex compositions is well known in the paint and coatings art. Any of the well known free-radical emulsion polymerization techniques used to formulate latex polymers can be used in the present invention. Such procedures include, for example, single feed, core-shell, and inverted core-shell procedures which produce homogeneous or structured particles.

In one useful embodiment the binder resin would be obtained by polymerizing a monomer mixture of 1-25% by weight of carbonyl a monomer having latent crosslinking functionality, 0.5 to 15% of an acid functional monomer and 60 to 98.5% other monomers. In another useful embodiment the monomer mixture would also comprise 0.1 to 10% of a wet adhesion promoting monomer. In another embodiment, the monomer mixture would comprise 1-25% by weight of a carbonyl monomer having latent crosslinking functionality, 0.5 to 15% of an acid functional monomer, 0.1 to 10% of a wet adhesion monomer, 1 to 55 parts styrene, and the remainder selected from other copolymerizable monomers.

The crosslinker for reaction with the latent crosslinking functionality need only be present in an amount necessary to achieve the desired degree of cure. For many applications, the crosslinker will typically be present at a level to provide at least 0.1 equivalent for each equivalent of latent crosslinking functionality.

In one of the embodiments of this invention, the crosslinker would be present at a level to provide between 0.2 to 2.0 equivalents for each equivalent of latent crosslinking functionality. In some useful embodiments the crosslinker will be present at a level to provide 0.4 to 1.2 equivalents for each equivalent of latent crosslinking functionality.

In another useful embodiment the crosslinker would be present at a level to provide 0.4 to 1.0 equivalent for each equivalent of latent crosslinking functionality.

The coatings of this invention will also comprise a polymeric extender comprising solid polyvinyl chloride particles. Polyvinyl chloride particles are taught in U.S. Published Application 2004/0034158 A1 (Reuter et al.).

In one embodiment of this invention, the polyvinyl chloride extender particles would have an average particle size in a range from 5 to 150 microns. The coating composition incorporating the polyvinyl chloride extender particles would be free of plasticizers. In the absence of plasticizers, the polyvinyl chloride extender particles remain as discrete particles in the film after the coating has cured or dried. In some embodiments, it is useful to utilize polymeric extender particles which are substantially free of any colored pigments dispersed therein.

As used herein, the term "plasticizer" means a nonaqueous, nonvolatile liquid medium that is compatible with polyvinyl chloride and when added to a coating composition containing polyvinyl chloride becomes a part of the dried film and increases film flexibility. Plasticizers, when admixed with the polyvinyl chloride would produce a gel by solublizing the polyvinyl chloride, and ultimately a fully fused solid when the composition is heated. Examples of plasticizers include phthalic acid esters, dibasic esters, phosphoric acid esters, polyester-based plasticizers and especially dioctyl phthalate and diisononyl phthalate.

As used herein, the term "polyvinyl chloride" shall mean a homopolymer of vinyl chloride, or a copolymer of at least 80 weight percent of units derived from vinyl chloride, with up to about twenty weight percent of one or more other vinyl monomers.

As defined above, the polyvinyl chloride extender particles may be homopolymers of vinyl chloride or copolymers of at least 80 weight percent of units derived from vinyl chloride, with up to about twenty weight percent of one or more other vinyl monomers. Suitable vinyl monomers include alpha-olefins, such as ethylene and propylene; vinyl esters, such as vinyl acetate, vinyl propionate, and vinyl benzoate; vinylidene chloride; alkyl (meth)acrylates, such as methyl acrylate, lauryl acrylate, methyl methacrylate and cetyl methacrylate; vinyl aromatic monomers, such as styrene and vinyl toluene; acrylonitrile; methacrylonitrile; and maleimides, such as N-cyclohexyl maleimide, N-phenylamaleimide, or maleimide. Preferably, however, the polyvinyl chloride extender particles are vinyl chloride homopolymers. Polyvinyl chloride polymers can be prepared by suspension polymerization or other techniques as is known in the art and are commercially available from a number of suppliers. One useful polyvinyl chloride resin extender particle is Geon 217 available from Poly One Corporation.

In some useful embodiments, the polyvinyl chloride extender particles will have an average particle size greater than 3 microns. For some applications, the polyvinyl chloride extender particles have an average particle size in a range from 5 microns to 150 microns, and frequently in a range from 10 microns to 100 microns. The polyvinyl chloride extender particles are solid and remain as discrete particles in the coatings of this invention even after the coating has cured or dried.

Preferably, the polyvinyl chloride extender particles have a Fikentscher K value between 50 and 80, more preferably between 60 and 70. The Fikentscher K value is determined by solution viscosity measurements and provides a measure of molecular weight. The correlation between the Fikentscher K value and number average molecular weight (Mn) is as follows: a Fikentscher K value of 50 is roughly equal to a Mn of 28,000 and a Fikentscher K value of 80 is roughly equal to a Mn of 80,000.

The amount of polymeric extender particles in the coating composition of the present invention, on a solids basis, is typically from 5 to 60 weight percent, and often from 25 to 50 weight percent, based on the total weight of solids of the coating composition.

The coating composition of the present invention is manufactured using techniques known to those skilled in the art of manufacturing paint. The coatings of this invention may also include conventional pigments and flattening agents as well as various additives. Examples of suitable inorganic flatting agents include silicates, such as talc, and various forms of silica, such as amorphous, aerogel, diatomaceous, hydrogel and fumed silicas. Conventional pigments include titanium dioxide, zinc oxide, and other inorganic or organic pigments. The coatings of this invention also may incorporate one or more polymeric opacifying agents. The polymeric opacifiers are generally small particle size non-film forming polymerized beads which are insoluble in the coating in which they are dispersed. Typically the polymeric opacifying agents will replace some of the hiding pigments which would otherwise be incorporated into the coating. The beads may be solid or they may contain vesicles or dispersed pigments within the polymerized bead. Representative polymeric particles useful as opacifying agents include beads of polystyrene, polyacrylic, polyethylene, polyamide, poly(vinylacetate ethylene), melamine formaldehyde, urea formaldehyde, polyester and polyurethane. Representative commercially available polymeric pigments are sold under the Ropaque, Dylex (polystyrene) and Pergopak (urea formaldehyde) trademarks. If polymeric opacifying agents are incorporated they typically will comprise between about 1% and about 85% by weight of the total amount of opacifying agents and pigments. Typical additives include dispersants, preservatives, anti foaming agents, thickeners, etc. The coatings of this invention can be applied to any substrate such as wood, wallboard, metal, etc. by any application method including spraying, brushing, rolling, etc. in one embodiment the coatings are especially useful as interior or exterior paints, especially house paints.

The present invention will be better understood by reference to the following examples, which are provided for purposes of illustration only and are not to be construed as limiting the scope of the present invention.

### EXAMPLE 1

A latex polymer was prepared as follows. A reaction vessel was charged with 124.75 parts water and heated to 85°C under a nitrogen blanket. A first mixture of 6.14 parts water, 1.39 parts surfactant (Abex EP-110, an anionic surfactant available from Rhodia), 0.082 parts 28% aqueous ammonia, and 0.30 parts ammonium persulfate was then added to the heated water. A feed mixture of 50.88 parts water, 8.08 parts Abex EP-110, 3.72 parts methacrylic acid, 1.49 parts Sipomer PAM 100 (phosphate ester of 2-hydroxyethyl methacrylate from Rhodia), 5.98 parts Rohamere 6844 (25% aqueous solution of N-(2-methacryloxyethyl)ethylene urea from Rohm Tech, Inc.), 79.05 parts 2-ethyl hexyl acrylate, 54.70 parts styrene, 3.07 parts water and 4.48 parts diacetone acrylamide was prepared, as was an initiator mixture of 0.30 parts ammonium persulfate and 15.36 parts water. The feed mixture and the initiator mixture were then simultaneously added to the heated (85°C) reaction mixture over a period of 3 hours. Upon completion of the additions, the reaction was maintained at 85°C for an additional hour. The reaction was then allowed to cool to 65°C and a chase oxidizer mixture of 0.21 parts t-butyl hydroperoxide in 2.4 parts water and a chase reducer mixture of 0.15 parts isoascorbic acid, 2.40 parts water, and 0.07 parts 28% aqueous ammonia were both added over 45 minutes and the reaction was held at 65°C for 45 minutes thereafter. The reaction was then allowed to cool to 35°C and 0.22 parts Proxel GXL and 0,75 parts 28% aqueous ammonia were added. 1.72 parts adipic dihydrazide was pre-dissolved in 5.16 parts water by heating to 60°C and mixing for 15 minutes, and that solution was then added to the reaction mixture over a three minute period. The reaction was mixed for an additional 15 minutes and then filtered to provide the final self-crosslinking latex mixture. The latex product had a Tg of approximately -4°C, and an NVM of 41.600%.

### EXAMPLE 2

A latex mixture could be prepared by the process as shown in Example 1 except replacing the Abex EP-110 with a comparable solids amount of Rhodafac RE610 (a nonyl-phenol ethoxylated phosphate ester from Rhodia) and the monomer mix to provide, on a weight solids basis, 4% diacetone acrylamide, 1.0% methacrylic acid, 2.2% PAM 100, 52.8% 2-ethyl hexyl acrylate, and 40% styrene. The same equivalent ratio of adipic dihydrazide as in Example 1 could be utilized.

### EXAMPLE 3

A representative flat latex coating composition could be prepared by admixing the following materials in the order shown:

| Raw Material | Parts by Weight |
|---|---|
| Self-crosslinking latex of Example 2 | 39.50 |
| Defoamer¹ | 0.20 |
| Polymeric opacifying pigment² | 9.50 |
| Water | 9.15 |
| Attapulgite clay | 0.50 |
| Hydroxyethyl cellulose thickener | 0.08 |
| Microbiocide | 0.05 |
| Surfactant³ | 1.26 |
| Nonionic surfactant⁴ | 0.20 |
| 2 amino-2-methyl-1-proponol | 0.30 |
| Defoamer¹ | 0.20 |
| Ground feldspar | 9.50 |
| Polyvinyl chloride particles⁵ | 4.00 |
| Water | 0.83 |
| Ethylene glycol | 1.10 |
| Associative thickener⁶ | 1.60 |
| Water | 0.08 |
| 20% active fungicide | 0.20 |
| Titanium dioxide slurry⁷ | 30.00 |
| Water | 0.62 |
| Defoamer¹ | 0.10 |

| | |
|---|---|
| ¹ Sher-Defoam, proprietary defoamer of the assignee of this application ² Ropaque OP-96 from Rohm and Haas ³ Tamol 165-A from Rohm and Haas ⁴ Triton N-57 nonionic surfactant from Rohm and Haas ⁵ Geon 217 from Poly One Corporation. Vinyl chloride homopolymer having an average particle size of about 35 microns ⁶ Acrysol RM-2020 NPR polymer solution from Rohm and Haas ⁷ R-746 from Rohm and Haas | |

## Claims

1. An aqueous coating composition comprising:
(i) a binder resin having latent crosslinking functionality, wherein the latent crosslinking functionality comprises carbonyl groups;
(ii) an effective crosslinking amount of a crosslinker for the binder resin, wherein the crosslinking agent is selected from the group consisting of di and poly amines, di and poly hydrazides, and di and poly hydrazines and mixtures thereof.
(iii) polyvinyl chloride polymeric extender particles.

2. The coating of claim 1 wherein the binder resin is a latex resin.

3. The coating of claim 2 wherein the latex resin is a polymerized reaction product of a mixture of monomers comprising:
(i) 1 to 25% by weight of a monomer having carbonyl latent crosslinking functionality;
(ii) 0.5 to 15% by weight of an acid functional monomer;
(iii) 60 to 98.5% of at least one other copolymerizable monomer.

4. The coating of claim 2 wherein the latex resin is the polymerized reaction product of a mixture of monomers comprising:
(i) 1 to 25% by weight of a monomer having carbonyl latent crosslinking functionality;
(ii) 0.5 to 15% by weight of an acid functional monomer;
(iii) 0.1 to 10% of a wet adhesion promoting monomer; and
(iv) 50 to 98.4% of at least one other copolymerizable monomer.

5. The coating of claim 2 wherein the latex resin is the polymerized reaction product of a mixture of monomers comprising:
(i) 1 to 25% by weight of a monomer having carbonyl latent crosslinking functionality;
(ii) 0.5 to 15% by weight of an acid functional monomer;
(iii) 0.1 to 10% of a wet adhesion promoting monomer;
(iv) 1 to 55% by weight of styrene; and
(v) zero to 98.4% by weight of at least one other copolymerizable

6. The coating of claim 1 wherein the polyvinyl chloride particles have an average particle size greater than 5 microns.

7. The coating of claim 1 wherein the polyvinyl chloride particles have an average particle size of 5 to 150 microns.

8. The coating of claim 1 wherein the polyvinyl chloride extender particles are homopolymers ofvinyl chloride.

9. The coating composition of claim 1 wherein the polyvinyl chloride polymeric extender particles are present at 5 to 60 weight percent on a solids basis of the coating composition.

10. The coating composition of claim 9 wherein the polymeric extender particles are present at a level of 25 to 50 weight per cent on a solids basis of the coating composition.

11. The coating composition of claim 1 wherein the crosslinker is present at a level to provide at least 0.1 equivalent for each equivalent of latent crosslinking functionality.

12. The coating composition of claim 1 wherein the crosslinker is present at a level to provide 0.2 to 2.0 equivalents for each equivalent of latent crosslinking functionality.

13. The coating composition of claim 1 wherein the crosslinker is present at a level to provide 0.4 to 1.2 equivalents for each equivalent of latent crosslinking functionality.

14. A process for coating a substrate which process comprises
(i) applying to the substrate an aqueous coating composition as defined in any of claims 1 to 13, and
(ii) allowing the coating to crosslink.

15. A substrated coating by the process of claim 14.

## Patentansprüche

1. Eine wässrige Beschichtungszusammensetzung, umfassend:
(i) ein Binderharz mit latenter vernetzender Funktionalität, wobei die latente vernetzende Funktionalität Carbonylgruppen umfasst,
(ii) eine wirksame vernetzende Menge eines Vernetzungsmittels für das Binderharz, wobei das Vernetzungsmittel ausgewählt ist aus der Gruppe, bestehend aus Di- und Polyaminen, Di- und Polyhydraziden und Di- und Polyhydrazinen und Mischungen davon,
(iii) polymere Polyvinylchlorid-Extenderpartikel.

2. Die Beschichtung nach Anspruch 1, wobei das Binderharz ein Latexharz ist.

3. Die Beschichtung nach Anspruch 2, wobei das Latexharz ein polymerisiertes Reaktionsprodukt einer Monomerenmischung ist, umfassend:
(i) 1 bis 25 Gew.-% eines Monomers mit latenter vernetzender Carbonylfunktionalität,
(ii) 0,5 bis 15 Gew.-% eines säurefunktionellen Monomers,
(iii) 60 bis 98,5 % wenigstens eines weiteren copolymerisierbaren Monomers.

4. Die Beschichtung nach Anspruch 2, wobei das Latexharz das polymerisierte Reaktionsprodukt einer Monomerenmischung ist, umfassend:
(i) 1 bis 25 Gew.-% eines Monomers mit latenter vernetzender Carbonylfunktionalität,
(ii) 0,5 bis 15 Gew.-% eines säurefunktionellen Monomers,
(iii) 0,1 bis 10 % eines die Nasshaftung fördernden Monomers und
(iv) 50 bis 98,4 % wenigstens eines weiteren copolymerisierbaren Monomers.

5. Die Beschichtung nach Anspruch 2, wobei das Latexharz das polymerisierte Reaktionsprodukt einer Monomerenmischung ist, umfassend:
(i) 1 bis 25 Gew.-% eines Monomers mit latenter vernetzender Carbonylfunktionalität,
(ii) 0,5 bis 15 Gew.-% eines säurefunktionellen Monomers,
(iii) 0,1 bis 10 % eines die Nasshaftung fördernden Monomers,
(iv) 1 bis 55 Gew.-% Styrol und
(v) null bis 98,4 Gew.-% wenigstens eines weiteren copolymerisierbaren Monomers.

6. Die Beschichtung nach Anspruch 1, wobei die Polyvinylchloridpartikel eine mittlere Partikelgröße von mehr als 5 Mikrometer besitzen.

7. Die Beschichtung nach Anspruch 1, wobei die Polyvinylchloridpartikel eine mittlere Partikelgröße von 5 bis 150 Mikrometer besitzen.

8. Die Beschichtung nach Anspruch 1, wobei die Polyvinylchlorid-Extenderpartikel Vinylchlorid-Homopolymere sind.

9. Die Beschichtungszusammensetzung nach Anspruch 1, wobei die polymeren Polyvinylchlorid-Extenderpartikel in einer Menge von 5 bis 60 Gew.-% auf Feststoffbasis vorliegen, bezogen auf die Beschichtungszusammensetzung.

10. Die Beschichtungszusammensetzung nach Anspruch 9, wobei die polymeren Extenderpartikel in einer Menge von 25 bis 50 Gew.-% auf Feststoffbasis vorliegen, bezogen auf die Beschichtungszusammensetzung.

11. Die Beschichtungszusammensetzung nach Anspruch 1, wobei das Vernetzungsmittel in einer derartigen Menge vorliegt, dass wenigstens 0,1 Äquivalente für jedes Äquivalent der latenten vernetzenden Funktionalität bereitgestellt werden.

12. Die Beschichtungszusammensetzung nach Anspruch 1, wobei das Vernetzungsmittel in einer derartigen Menge vorliegt, dass 0,2 bis 2,0 Äquivalente für jedes Äquivalent der latenten vernetzenden Funktionalität bereitgestellt werden.

13. Die Beschichtungszusammensetzung nach Anspruch 1, wobei das Vernetzungsmittel in einer derartigen Menge vorliegt, dass 0,4 bis 1,2 Äquivalente für jedes Äquivalent der latenten vernetzenden Funktionalität bereitgestellt werden.

14. Ein Verfahren zur Beschichtung eines Substrats, wobei das Verfahren umfasst:
(i) Auftragen einer wässrigen Beschichtungszusammensetzung wie in einem der Ansprüche 1 bis 13 definiert auf das Substrat und
(ii) Vernetzenlassen der Beschichtung.

15. Ein durch das Verfahren nach Anspruch 14 beschichtetes Substrat.

## Revendications

1. Composition de revêtement aqueuse comprenant :
(i) une résine liante possédant une fonctionnalité à réticulation latente, où la fonctionnalité à réticulation latente comprend des groupements carbonyles ;
(ii) une quantité d'un réticulant assurant une réticulation efficace de la résine liante, où l'agent réticulant est sélectionné dans le groupe consistant en des di- et polyamines, des di- et polyhydrazides, des di- et polyhydrazines et des mélanges de ceux-ci ;
(iii) des particules de charge polymères de chlorure de polyvinyle.

2. Revêtement de la revendication 1, où la résine liante est une résine latex.

3. Revêtement de la revendication 2, où la résine latex est un produit de réaction polymérisé d'un mélange de monomères comprenant :
(i) de 1 à 25 % en poids d'un monomère possédant une fonctionnalité carbonyle à réticulation latente ;
(ii) de 0,5 à 15 % en poids d'un monomère acide fonctionnel ;
(iii) de 60 à 98,5 % d'au moins un autre monomère copolymérisable.

4. Revêtement de la revendication 2, où la résine latex est le produit de réaction polymérisé d'un mélange de monomères comprenant :
(i) de 1 à 25 % en poids d'un monomère possédant une fonctionnalité carbonyle à réticulation latente ;
(ii) de 0,5 à 15 % en poids d'un monomère acide fonctionnel ;
(iii) de 0,1 à 10 % d'un monomère favorisant l'adhésion à l'état humide ; et
(iv) de 50 à 98,4 % d'au moins un autre monomère copolymérisable.

5. Revêtement de la revendication 2, où la résine latex est le produit de réaction polymérisé d'un mélange de monomères comprenant :
(i) de 1 à 25 % en poids d'un monomère possédant une fonctionnalité carbonyle à réticulation latente ;
(ii) de 0,5 à 15 % en poids d'un monomère acide fonctionnel ;
(iii) de 0,1 à 10 % d'un monomère favorisant l'adhésion à l'état humide ;
(iv) de 1 à 55 % en poids de styrène ; et
(v) de zéro à 98,4 % en poids d'au moins un autre monomère copolymérisable.

6. Revêtement de la revendication 1, où les particules de chlorure de polyvinyle ont une taille moyenne supérieure à 5 microns.

7. Revêtement de la revendication 1, où les particules de chlorure de polyvinyle ont une taille moyenne allant de 5 à 150 microns.

8. Revêtement de la revendication 1, où les particules de charge de chlorure de polyvinyle sont des homopolymères de chlorure de vinyle.

9. Composition de revêtement de la revendication 1, où les particules de charge polymères de chlorure de polyvinyle sont présentes à 5 à 60 pour cent en poids sur la base des solides de la composition de revêtement.

10. Composition de revêtement de la revendication 9, où les particules de charge polymères de chlorure de polyvinyle sont présentes à 25 à 50 pour cent en poids sur la base des solides de la composition de revêtement.

11. Composition de revêtement de la revendication 1, où le réticulant est utilisé à un taux assurant qu'il est présent à au moins 0,1 équivalent pour chaque équivalent de la fonctionnalité à réticulation latente.

12. Composition de revêtement de la revendication 1, où le réticulant est utilisé à un taux assurant qu'il est présent à 0,2 à 2,0 équivalents pour chaque équivalent de la fonctionnalité à réticulation latente.

13. Composition de revêtement de la revendication 1, où le réticulant est utilisé à un taux assurant qu'il est présent à 0,4 à 1,2 équivalent pour chaque équivalent de la fonctionnalité à réticulation latente.

14. Procédé de revêtement d'un substrat, ledit procédé comprenant les étapes qui consistent à :
(i) appliquer sur le substrat une composition de revêtement aqueuse telle que définie à l'une quelconque des revendications 1 à 13 ; et
(ii) laisser le revêtement réticuler.

15. Revêtement d'un substrat par le procédé de la revendication 14.
